# EUROPEAN PATENT SPECIFICATION

(11) **EP 3 764 733 B1**
(45) Date of publication and mention of the grant of the patent: **06.05.2026**
(21) Application number: 19781254.8
(22) Date of filing: 25.03.2019
(51) Int. Cl.: H04W 76/28, H04L 1/18, H04L 5/00, H04W 52/02

(54) **DRX COMMUNICATION**
DRX-KOMMUNIKATION
COMMUNICATION DRX

(30) Priority: 04.04.2018 CN 201810301051
(43) Date of publication of application: 13.01.2021
(73) Proprietor: HUAWEI TECHNOLOGIES CO., LTD., Shenzhen, Guangdong 518129 (CN)
(72) Inventor: YOU, Chunhua, Shenzhen, Guangdong 518129 (CN); LIU, Xing, Shenzhen, Guangdong 518129 (CN); ZHAO, Li, Shenzhen, Guangdong 518129 (CN)
(74) Representative: Maiwald GmbH
(86) International application number: PCT/CN2019/079526
(87) International publication number: WO 2019/192342

(56) References cited:
- EP-A1- 3 226 456
- EP-A1- 3 716 713
- EP-A2- 2 298 009
- WO-A1-2017/122135
- WO-A1-2017/122135
- WO-A1-2017/130737
- CN-A- 104 427 595
- CN-A- 104 518 855
- CN-A- 107 079 311
- CN-A- 107 787 034
- US-A1- 2014 086 110
- ERICSSON: "Remaining issues on DRX timers", vol. RAN WG2, no. Reno, Nevada, USA; 20171127 - 20171201, 17 November 2017 (2017-11-17), XP051372179, Retrieved from the Internet <URL:http://www.3gpp.org/ftp/tsg%5Fran/WG2%5FRL2/TSGR2%5F100/Docs/> [retrieved on 20171117]
- "3rd Generation Partnership Project; Technical Specification Group Radio Access Network; NR; Medium Access Control (MAC) protocol specification (Release 15)", 3GPP STANDARD; TECHNICAL SPECIFICATION; 3GPP TS 38.321, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V15.1.0, 2 April 2018 (2018-04-02), pages 1 - 67, XP051450732
- "3rd Generation Partnership Project; Technical Specification Group Radio Access Network; 5GS; UE conformance specification; Part 1: Protocol conformance specification (Release 15)", 3GPP STANDARD; TECHNICAL SPECIFICATION; 3GPP TS 38.523-1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG5, no. V0.2.0, 26 March 2018 (2018-03-26), pages 1 - 155, XP051450503

## Description

### TECHNICAL FIELD

Embodiments of the present invention relate to the communications field, and in particular, to a discontinuous reception communication method, communications apparatus, terminal device, computer-readable storage medium and a communications system.

### BACKGROUND

A wireless communications system may provide various types of communication content such as voices, videos, packet data, message transfer, and broadcast.

In the wireless communications system, a discontinuous reception (discontinuous reception, DRX) function may be used to reduce power usage of a terminal device in idle mode or in connected mode. DRX means that the terminal device enters a wake-up state only in an awake (awake) period, which is sometimes also referred to as an active time (active time). For example, the terminal device turns on a receiver to receive downlink data and signaling, and enters a sleep (sleep) state in another time. For example, the terminal device turns off the receiver to stop receiving downlink data and signaling.

As technologies evolve, technologies such as preemption, grant free (grant free) scheduling, and hybrid automatic repeat request (hybrid automatic repeat request, HARQ) are gradually introduced into the wireless communications system. How these technologies are used together with a DRX function is a problem that needs to be resolved. The article from Ericsson: "Remaining issues on DRX timers", 3GPP Draft; R2-1713471 - Remaining Issues On DRX Timers, RAN WG2, Reno, Nevada, USA; 20171127 - 20171201 17 November 2017 (2017-11-17), XP051372179, refers to DRX timers. The EP 2 298 009 A1 refers to a method and an apparatus for controlling discontinuous reception in a wireless network. The EP 3 226 456 A1 refers to an asynchronous retransmission protocol. The US 2014 / 086 110 A1 refers to a method for counting timer for retransmission in a wireless communication system and an apparatus therefor. The article "3rd Generation Partnership Project; Technical Specification Group Radio Access Network; NR; Medium Access Control (MAC) protocol specification (Release 15)", 3GPP STANDARD; Technical Specification; 3GPP TS 38.321, RAN WG2, V15.1.0, 2 April 2018, pages 1-67, XP051450732" refers to Medium Access Control (MAC) protocol specification (Release 15). The 3rd Generation Partnership Project; Technical Specification Group Radio Access Network; 5GS; UE conformance specification; Part 1: Protocol conformance specification (Release 15)", 3GPP STANDARD; Technical Specification; 3GPP TS 38.523-1, RAN WG5, V0.2.0, 26 March 2018 (2018-03-26), pages 1-155, XP051450503 refers to UE conformance specification; Part 1: Protocol conformance specification (Release 15). The WO 2017 / 122135A1 refers to a method for controlling connected mode DRX connections. Patent application EP3716713 A1 discloses a DRX method using grant-free scheduling resources.

### SUMMARY

The claimed invention defines a discontinuous reception communications method, communication apparatus, terminal device, computer-readable storage medium and a communications system, to reduce an active time of a terminal device in DRX mode during HARQ retransmission, and reduce power consumption. The embodiments of the present invention further provide a discontinuous reception communication method and communications apparatus, a communications device, and a communications system, so that a terminal device in DRX mode can update an available resource in time before sending data, thereby reducing a resource conflict during data sending and avoiding interference to another terminal device. The present application is defined in the appended independent claims. Further implementations are disclosed in the pending dependent claims. In the following, implementations not falling within the scope of the claims are to be understood as examples useful for understanding the application.

According to a first aspect, a discontinuous reception communication method is provided, and may be applied to a terminal device. The method includes:
receiving, during running of a timer T11, indication information sent by a network device, where the indication information includes HARQ feedback information for initial transmission or retransmission of data of the terminal device; and
stopping the timer T11.

The timer T11 is started after the initial transmission or the retransmission of the data and is used to monitor a physical downlink control channel PDCCH.

In the foregoing method, the terminal device stops the timer T11 immediately when receiving the HARQ feedback information, and is allowed to enter a sleep state. In other words, the terminal device may enter the sleep state when no other condition that meets an active time is true. This shortens the active time of the terminal device in DRX mode, and reduces power consumption.

With reference to the first aspect, in a first possible implementation of the first aspect, the method may further include: after the timer T11 is stopped, if a current moment is not in an active time, determining to enter the sleep state.

With reference to the first aspect and the first possible implementation of the first aspect, in a second possible implementation of the first aspect, whether to stop the timer T11 may be determined based on the indication information or depending on whether a grant-free scheduling resource is allocated.

For example, if it is determined, based on the indication information, that there is no need to continue to wait for an uplink grant, to be specific, if the indication information is an acknowledgment, or the indication information is an acknowledgment and no other data needs to be transmitted, it is determined that the timer T11 may be stopped.

For another example, if it is determined that a grant-free scheduling resource has been allocated, the timer T11 may be stopped.

In this manner, once determining, based on the indication information, that retransmission of the data or initial transmission of other data is needed, the terminal device may perform transmission by using an allocated grant-free scheduling resource, without a need to wait for an uplink grant. This manner does not affect a normal scheduling scenario, and the terminal device may still wait to receive an uplink grant during running of drx-RetransmissionTimerUL, to avoid that the network device fails to send the uplink grant in this time period and resends the uplink grant in another active time.

Based on the first aspect or the possible implementations of the first aspect, the method may further include:
determining, based on the indication information, whether to retransmit the data on a first grant-free scheduling resource.

For example, if the indication information includes a negative acknowledgment, and a grant-free scheduling resource has been allocated, the first grant-free scheduling resource may be determined in the grant-free scheduling resource to retransmit the data.

In any one of the foregoing implementations, the indication information may be downlink feedback information DFI.

In any one of the foregoing implementations, the indication information may further include a carrier indicator field CIF, transmit power control TPC, or a carrier indicator field CIF and transmit power control TPC.

In any one of the foregoing implementations, the indication information may be scrambled by using a cell radio network temporary identifier C-RNTI.

In any one of the foregoing implementations, the initial transmission or the retransmission of the data is sent on a second grant-free scheduling resource or a resource allocated during normal scheduling.

In any one of the foregoing implementations, the timer T11 may be drx-RetransmissionTimerUL.

According to a second aspect, a discontinuous reception communication method is provided, and may be applied to a terminal device. The method includes:
receiving uplink grant information in a first time period, where the uplink grant information is used to allocate an uplink transmission resource, an end moment of the first time period is t1, an end moment of the uplink transmission resource is t2, and t2≥t1;
receiving resource update information in a second time period, where the resource update information is used to indicate an available status of a part or all of the uplink transmission resource, a start moment of the second time period is t3, an end moment of the second time period is t4, t3≥t1, and t4≤t2; and
determining, based on the resource update information, a resource available to send data in the uplink transmission resource.

In the foregoing method, when the uplink transmission resource of the terminal device in DRX mode is preempted, the terminal device can receive the resource update information in time, and determine the resource available to send data, thereby avoiding a resource occupation conflict during data transmission of different services or different terminal devices.

With reference to the second aspect, in a first possible implementation of the second aspect, the receiving resource update information in a second time period includes:
starting a timer T21 whose duration is m at the start moment t3 of the second time period, where the duration m meets m = t4 - t3; and
receiving the resource update information.

For example, maximum duration M of the timer T21 and a location of the end moment t4 of the second time period may be indicated by a network device to the terminal device or defined by a system. The terminal device may determine the end moment t4 of the second time period based on the location of the end moment t4 of the second time period, and the duration m of the timer T21 is a smaller value of M and t4-t1.

For another example, maximum duration M of the timer T21 and a location of the start moment t3 of the second time period may be indicated by a network device to the terminal device or defined by a system. The terminal device may determine the start moment t3 of the second time period based on the location of the start moment t3 of the second time period, and the duration m of the timer T21 is a smaller value of M and t2-t3.

It is relatively simple to control, by using the timer, the terminal device to receive the resource update information in the second time period.

With reference to the second aspect or the first possible implementation of the second aspect, in a second possible implementation of the second aspect, the method further includes:
stopping the timer T21 after receiving the resource update information.

If no other condition that meets an active time is true, it may be determined that the terminal device enters a sleep state.

Based on the second aspect or the possible implementations of the second aspect, the method further includes:
if it is determined that there are available resources for sending data, sending data on these resources when a data sending occasion arrives.

Because resources are updated in time, when the data is sent on a determined available resource, interference to data transmission of another terminal device is avoided.

According to a third aspect, a discontinuous reception communication method is provided, and may be applied to a terminal device. The method includes:
starting a timer T31, where the timer T31 is used to monitor a physical downlink control channel PDCCH;
receiving uplink grant information, where the uplink grant information is used to allocate an uplink transmission resource;
receiving resource update information, where the resource update information is used to indicate an available status of a part or all of the uplink transmission resource; and
determining, based on the resource update information, a resource available to send data in the uplink transmission resource.

In the foregoing method, when the uplink transmission resource of the terminal device in DRX mode is preempted, the terminal device can receive the resource update information in time, and determine the resource available to send data, thereby avoiding a resource occupation conflict during data transmission of different services or different terminal devices.

With reference to the third aspect, in a first possible implementation of the third aspect, the method further includes:
sending data on the resource available to send data; and
stopping the timer T31 if the timer T31 is in a running period.

Optionally, if the terminal device determines that there is no available resource for sending data, the terminal device may stop the timer T31.

Optionally, if the terminal device determines that there is an available resource for sending data, the terminal device may stop the timer T31 after completing sending of the data.

Further, after the timer T31 is stopped, if no other condition that meets an active time is true, the terminal device may enter a sleep state.

In the method, the active time of the timer T31 can be fully utilized to reduce complexity of a DRX process.

With reference to the third aspect or the first possible implementation of the third aspect, in a second possible implementation of the third aspect, the timer T31 may be drx-RetransmissionTimerUL.

Based on the second aspect, the possible implementations of the second aspect, the third aspect, or the possible implementations of the third aspect, the determining, based on the resource update information, a resource available to send data in the uplink transmission resource includes:
determining an available resource in the uplink transmission resource based on the available status of the part or all of the uplink transmission resource.

In the foregoing implementations, the available status of the resource is one of the following: preempted, invalid, or available.

According to a fourth aspect, a discontinuous reception communication method is provided, and may be applied to a network device. The method includes:
determining that a terminal device is in an active time;
sending uplink grant information to the terminal device, where the uplink grant information is used to allocate an uplink transmission resource; and
sending resource update information to the terminal device, where the resource update information is used to indicate an available status of a part or all of the uplink transmission resource.

In the foregoing method, when the uplink transmission resource of the terminal device in DRX mode is preempted, the terminal device may be notified in time to receive the resource update information.

With reference to the fourth aspect, in a first possible implementation of the fourth aspect, the sending resource update information to the terminal device includes:
determining that the available status of the part or all of the uplink transmission resource changes; and
sending the resource update information to the terminal device.

With reference to the fourth aspect or the first possible implementation of the fourth aspect, in a second possible implementation of the fourth aspect, the sending uplink grant information to the terminal device includes:
sending the uplink grant information to the terminal device in a first time period, where the uplink grant information is used to allocate the uplink transmission resource, an end moment of the first time period is t1, an end moment of the uplink transmission resource is t2, and t2≥t1; and
the sending resource update information to the terminal device includes:
   sending the resource update information to the terminal device in a second time period, where the resource update information is used to indicate the available status of the part or all of the uplink transmission resource, a start moment of the second time period is t3, an end moment of the second time period is t4, t3≥t1, and t4≤t2.

With reference to the fourth aspect or the possible implementations of the fourth aspect, in a third possible implementation of the fourth aspect, the method further includes:
receiving data of the terminal device on an available resource in the uplink transmission resource.

Because the terminal device is notified in time to receive the resource update information, receiving of data of a plurality of terminal devices on an occupied resource is avoided, and a receiving error is avoided.

In the foregoing implementations, the available status of the resource is one of the following: preempted, invalid, or available.

According to a fifth aspect, a communications apparatus is provided, and may include a corresponding module configured to perform any possible implementation of the first aspect in the foregoing method designs. The module may be software, hardware, or software and hardware.

In a possible design, the communications apparatus provided in the fifth aspect includes: a transceiver unit, configured to receive indication information from a network device; and a control unit, configured to stop a timer T11.

Optionally, the communication apparatus further includes a determining unit, configured to determine, based on the received indication information, whether to retransmit data on a first grant-free scheduling resource.

Optionally, the transceiver unit may be further configured to initially transmit or retransmit the data, and receive an uplink grant for the initial transmission or the retransmission of the data.

Optionally, the control unit may be further configured to start the timer T11, and control the communications apparatus to be in an active time.

The apparatus may be configured to perform the method according to any possible implementation of the first aspect. For details, refer to the descriptions in the foregoing aspect.

In a possible design, the control unit and/or the determining unit may be one or more processors.

The transceiver unit may be a transceiver or a transceiver machine, or may be an input/output circuit or a communications interface. For example, the communications apparatus may be a terminal, a base station, or a network device, and the transceiver unit of the communications apparatus may be a transceiver or a transceiver machine. The communications apparatus may alternatively be a chip, and a transceiver component of the communications apparatus may be an input/output circuit of the chip.

According to a sixth aspect, a communications apparatus is provided, and may include a corresponding module configured to perform any possible implementation of the second aspect in the foregoing method designs. The module may be software, hardware, or software and hardware.

In a possible design, the communications apparatus provided in the sixth aspect includes: a transceiver unit, configured to receive uplink grant information from a network device in a first time period and receive resource update information from the network device in a second time period, where an end moment of the first time period is t1, the uplink grant information is used to allocate an uplink transmission resource, an end moment of the uplink transmission resource is t2, t2≥t1, a start moment of the second time period is t3, an end moment of the second time period is t4, t3≥t1, and t4≤t2; a control unit, configured to control the transceiver unit to receive the resource update information from the network device in the second time period; and a determining unit, configured to determine, based on the resource update information, a resource available to send data in the uplink transmission resource.

Optionally, the transceiver unit may be further configured to: when it is determined that there are available resources for sending data, send data on these resources on a data sending occasion.

Optionally, the control unit may start, at the start moment t3 of the second time period, the timer T21 whose duration is m slots, so that the communications apparatus is in an active time.

The apparatus may be configured to perform the method according to any possible implementation of the second aspect. For details, refer to the descriptions in the foregoing aspect.

In a possible design, the control unit and/or the determining unit may be one or more processors.

The transceiver unit may be a transceiver or a transceiver machine, or may be an input/output circuit or a communications interface. For example, the communications apparatus may be a terminal, a base station, or a network device, and the transceiver unit of the communications apparatus may be a transceiver or a transceiver machine. The communications apparatus may alternatively be a chip, and a transceiver component of the communications apparatus may be an input/output circuit of the chip.

According to a seventh aspect, a communications apparatus is provided, and may include a corresponding module configured to perform any possible implementation of the third aspect in the foregoing method designs. The module may be software, hardware, or software and hardware.

In a possible design, the communications apparatus provided in the seventh aspect includes: a transceiver unit, configured to receive uplink grant information and resource update information from a network device, where an end moment of a first time period is t1, and the uplink grant information is used to allocate an uplink transmission resource; a control unit, configured to: start a timer T31, so that the communications apparatus is in an active time, and control the transceiver unit to receive the uplink grant information and the resource update information from the network device in the active time; and a determining unit, configured to determine, based on the resource update information, a resource available to send data in the uplink transmission resource.

Optionally, the transceiver unit may be further configured to: when it is determined that there are available resources for sending data, send data on these resources on a data sending occasion.

Optionally, the control unit may stop the timer T31 after the determining unit determines that there is no available resource for sending data or after the transceiver unit sends the data.

The apparatus may be configured to perform the method according to any possible implementation of the third aspect. For details, refer to the descriptions in the foregoing aspect.

In a possible design, the control unit and/or the determining unit may be one or more processors.

The transceiver unit may be a transceiver or a transceiver machine, or may be an input/output circuit or a communications interface. For example, the communications apparatus may be a terminal, a base station, or a network device, and the transceiver unit of the communications apparatus may be a transceiver or a transceiver machine. The communications apparatus may alternatively be a chip, and a transceiver component of the communications apparatus may be an input/output circuit of the chip.

According to an eighth aspect, a communications apparatus is provided, and may include a corresponding module configured to perform any possible implementation of the fourth aspect in the foregoing method designs. The module may be software, hardware, or software and hardware.

In a possible design, the communications apparatus provided in the eighth aspect includes: a determining unit, configured to determine that a terminal device is in an active time; and a transceiver unit, configured to send uplink grant information and resource update information when the determining unit determines that the terminal device is in the active time.

The apparatus may be configured to perform the method according to any possible implementation of the fourth aspect. For details, refer to the descriptions in the foregoing aspect.

In a possible design, the determining unit may be one or more processors.

The transceiver unit may be a transceiver or a transceiver machine, or may be an input/output circuit or a communications interface. For example, the communications apparatus may be a terminal, a base station, or a network device, and the transceiver unit of the communications apparatus may be a transceiver or a transceiver machine. The communications apparatus may alternatively be a chip, and a transceiver component of the communications apparatus may be an input/output circuit of the chip.

According to a ninth aspect, a communications apparatus is provided. The communications apparatus includes one or more processors.

In a possible design, the one or more processors may implement a function in any one of the first aspect and the implementations of the first aspect. Optionally, in addition to the function in any one of the first aspect and the implementations of the first aspect, the processors may further implement another function.

In a possible design, the one or more processors may implement a function in any one of the second aspect and the implementations of the second aspect. Optionally, in addition to the function in any one of the second aspect and the implementations of the second aspect, the processors may further implement another function.

In a possible design, the one or more processors may implement a function in any one of the third aspect and the implementations of the third aspect. Optionally, in addition to the function in any one of the third aspect and the implementations of the third aspect, the processors may further implement another function.

In a possible design, the one or more processors may implement a function in any one of the fourth aspect and the implementations of the fourth aspect. Optionally, in addition to the function in any one of the fourth aspect and the implementations of the fourth aspect, the processors may further implement another function.

Optionally, the communications apparatus provided in the ninth aspect may further include a transceiver and an antenna.

According to a tenth aspect, an embodiment of the present invention provides a communications system, and the system includes the communications apparatus described in any one of the fifth aspect to the ninth aspect.

According to another aspect, an embodiment of the present invention provides a computer storage medium, where the computer storage medium stores a program, and when the program is run, a computer is enabled to perform the methods according to the foregoing aspects.

Still another aspect of this application provides a computer program product including an instruction, and when the computer program product runs on a computer, the computer is enabled to perform the methods according to the foregoing aspects.

According to the discontinuous reception communication method and communications apparatus, the communications device, and the communications system provided in the embodiments of this application, duration in which the terminal device is in the active state can be shortened, and power consumption can be further reduced. According to the discontinuous reception communication method and communications apparatus, the communications device, and the communications system provided in the embodiments of this application, when the uplink transmission resource of the terminal device in DRX mode is preempted, the terminal device can receive the resource update information in time, and determine the resource available to send data, thereby avoiding a resource occupation conflict during data transmission of different services or different terminal devices.

### BRIEF DESCRIPTION OF DRAWINGS

FIG. 1 is a schematic diagram of a communications system according to an embodiment of this application;
FIG. 2 is a schematic diagram of a DRX communication process according to an embodiment of this application;
FIG. 3 is a schematic diagram of a DRX communication process combined with an HARQ process;
FIG. 4 is a schematic diagram of a DRX communication process according to an embodiment of this application;
FIG. 5 is a schematic flowchart of a DRX communication method according to an embodiment of this application;
FIG. 6 is a schematic interaction flowchart of a DRX communication method according to another embodiment of this application;
FIG. 7 is a schematic interaction flowchart of a DRX communication method according to another embodiment of the present invention;
FIG. 8 is a schematic interaction flowchart of a DRX communication method according to another embodiment of this application;
FIG. 9 is a schematic block diagram of a DRX communications apparatus according to an embodiment of this application;
FIG. 10 is a schematic block diagram of a DRX communications apparatus according to another embodiment of this application;
FIG. 11 is a schematic block diagram of a DRX communications apparatus according to another embodiment of this application;
FIG. 12 is a schematic block diagram of a DRX communications apparatus according to another embodiment of this application; and
FIG. 13 is a schematic block diagram of a DRX communications apparatus according to another embodiment of this application.

### DESCRIPTION OF EMBODIMENTS

To facilitate understanding, the following describes some nouns in this application.

The following describes technical solutions in embodiments of the present invention with reference to the accompanying drawings in the embodiments of the present invention.

The technical solutions in the embodiments of this application may be applied to various communications systems, for example, but not limited to, a narrowband internet of things (Narrow Band-Internet of Things, NB-IoT) system, a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an LTE frequency division duplex (Frequency Division Duplex, FDD) system, an LTE time division duplex (Time Division Duplex, TDD) system, a universal mobile telecommunications system (Universal Mobile Telecommunication System, UMTS), a worldwide interoperability for microwave access (Worldwide Interoperability for Microwave Access, WiMAX) communications system, and a future 5th Generation (5th Generation, 5G) system or new radio access technology (new radio access technology, NR) system.

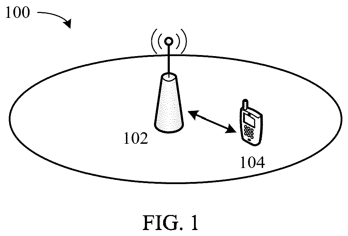

First, for ease of understanding the embodiments of this application, a communications system shown in FIG. 1 is used as an example to describe in detail a communications system to which the embodiments of this application are applicable. FIG. 1 is a schematic diagram of a communications system to which a communication method according to an embodiment of this application is applicable. As shown in FIG. 1, the communications system 100 may include a plurality of communications devices. The communications device may be a network device, or may be a terminal device. Using FIG. 1 as an example, the communications system 100 includes a network device 102 and a terminal device 104, and the network device 102 may communicate with the terminal device 104. Optionally, the communications system 100 may further include more network devices and/or more terminal devices. This is not limited in this application. Each network device 102 supports communication with a plurality of terminal devices 104 at the same time. For example, the network device 102 may communicate with the terminal devices 104 on a downlink channel and an uplink channel. The downlink may be used for transmission from the network device 102 to the terminal device 104. In this case, the network device 102 may be a transmit end device, and the terminal device 104 may be a receive end device. The uplink may be used for transmission from the terminal device to the network device 102. In this case, the network device 102 may be a receive end device, and the terminal device 104 may be a transmit end device.

The network device may be any communications device having wireless transceiving functions. The device includes but is not limited to: an evolved NodeB (evolved NodeB, eNB), a radio network controller (Radio Network Controller, RNC), a NodeB (NodeB, NB), a base station controller (Base Station Controller, BSC), a base transceiver station (Base Transceiver Station, BTS), a home base station (for example, a home evolved NodeB, or a home NodeB, HNB), a baseband unit (BaseBand Unit, BBU), an access point (Access Point, AP) in a wireless fidelity (Wireless Fidelity, Wi-Fi) system, a wireless relay node, a wireless backhaul node, a transmission point (transmission and reception point, TRP, or transmission point, TP), or the like. The device may be a gNB or a transmission point (TRP or TP) in a 5G system, for example, an NR system, or one antenna panel or a group of antenna panels (including a plurality of antenna panels) of a base station in a 5G system, or may be a network node, such as a baseband unit (BBU) or a distributed unit (distributed unit, DU), that constitutes a gNB or a transmission point.

In some deployments, the gNB may include a centralized unit (centralized unit, CU) and a DU. The gNB may further include a radio frequency unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from information at the PHY layer. Therefore, in this architecture, higher layer signaling, such as RRC layer signaling or PHCP layer signaling, may also be considered as being sent by the DU or sent by the DU and the RU. It may be understood that the network device may be a CU node, a DU node, or a device including a CU node and a DU node. In addition, the CU may be classified as a network device in an access network RAN, or the CU may be classified as a network device in a core network CN. This is not limited herein.

The terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communications device, a user agent, or a user apparatus. The terminal device in the embodiments of this application may be a mobile phone (mobile phone), a tablet computer (Pad), a computer with wireless transceiving functions, a virtual reality (Virtual Reality, VR) terminal device, an augmented reality (Augmented Reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application.

In the communications system 100, the network device 102 may communicate with a plurality of terminal devices (for example, including the terminal device 104 shown in FIG. 1). The terminal device 104 may also communicate with a plurality of network devices (for example, including the network device 102 shown in FIG. 1). A scenario, shown in FIG. 1, in which the network device 102 communicates with the terminal device 104 is merely a possible scenario to which the communication method provided in this application is applicable. The communication method provided in this application may be further applicable to more scenarios, such as a coordination multiple point (Coordination Multiple Point, CoMP) transmission scenario or a device to device (device to device, D2D) communication scenario. These are merely examples for ease of understanding, and are not shown in FIG. 1.

It should be noted that, nouns "network" and "system" are usually interchangeably used, and "apparatus" and "device" are also usually interchangeably used, but meanings of the nouns can be understood by a person skilled in the art. A "communications apparatus" may be a chip (such as a baseband chip, a data signal processing chip, or a general-purpose chip), a terminal, a base station, or another network device.

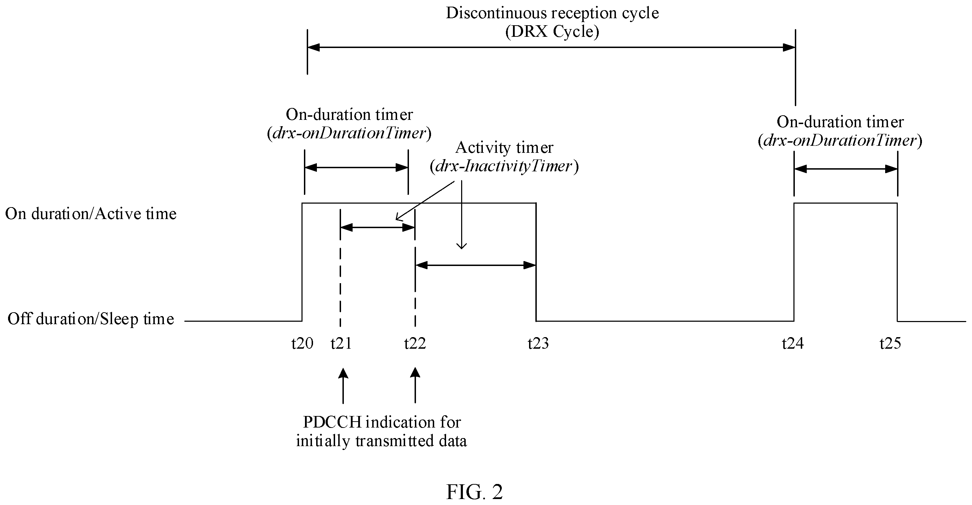

FIG. 2 shows an example of communication in which the terminal device 104 is in a DRX state. On duration (On Duration) indicates a time period in which the terminal device 104 monitors a control channel. In this duration, the terminal device enables a radio frequency channel, and continuously monitors a control channel, for example, receives a downlink assignment message or downlink feedback information. The time period in which the terminal device 104 monitors the control channel may also be referred to as an active time (active time), for example, a time period from t20 to t23 and a time period from t24 to t25 in FIG. 2, and the terminal device is in an awake (awake) state in the active time. The control channel may be a physical downlink control channel (physical downlink control channel, PDCCH) or the like. In another time different from the active time, the terminal device 104 is in a sleep (sleep) state, a radio frequency channel of the terminal device 104 is disabled, and the terminal device 104 does not monitor a control channel, to save power. Sometimes, the time is also referred to as off duration (Off Duration) or a sleep time, for example, a time period from t23 to t24 and a time period before t20 in FIG. 2. The on duration generally occurs based on a DRX cycle. The DRX cycle is further divided into a long cycle (long cycle) and a short cycle (short cycle). A quantity of times of waking up the terminal device 104 in a short cycle configuration is more than that in a long cycle configuration.

To implement a DRX function, a plurality of timers are defined in the system to control the active time and the sleep state. Examples are as follows:

### (1) DRX on-duration timer (drx-onDurationTimer):

The timer is used to indicate duration at the beginning of each DRX cycle. The timer is started at the beginning of each DRX cycle. As shown in FIG. 2, t20 and t24 each indicate a beginning of a DRX cycle. If both a long cycle and a short cycle are configured for the terminal device, duration of their drx-onDurationTimer is the same. The duration is an active time, and the terminal device is in an awake state, and needs to monitor a control channel.

### (2) DRX inactivity timer (drx-InactivityTimer)

The timer is used to indicate duration that is after an occasion on which the terminal device receives an indication on a control channel, for example, a PDCCH, where the indication is used to indicate initial uplink or downlink data transmission and is from a media access control (media access control, MAC) entity. The timer is started each time the terminal device receives a PDCCH indication for initial data transmission, as shown at t21 and t22 in FIG. 2. If the terminal device receives a next PDCCH indication for initial data transmission before the timer expires, as shown at t22 in FIG. 2, the terminal device stops and restarts the timer. The duration is an active time, and the terminal device is in an awake state, and needs to monitor the control channel.

After drx-InactivityTimer expires, the terminal device may enter a sleep state in the DRX cycle, and wait until a next cycle.

To provide reliable transmission, an HARQ technology is further introduced into the wireless communications system. A receive end device feeds back, to a transmit end device, whether data transmission is successful, and the transmit end device determines, based on feedback information, whether retransmission is needed. The receive end device combines and decodes initially transmitted content and retransmitted content of received data, to improve a decoding success rate, thereby improving a data transmission success rate.

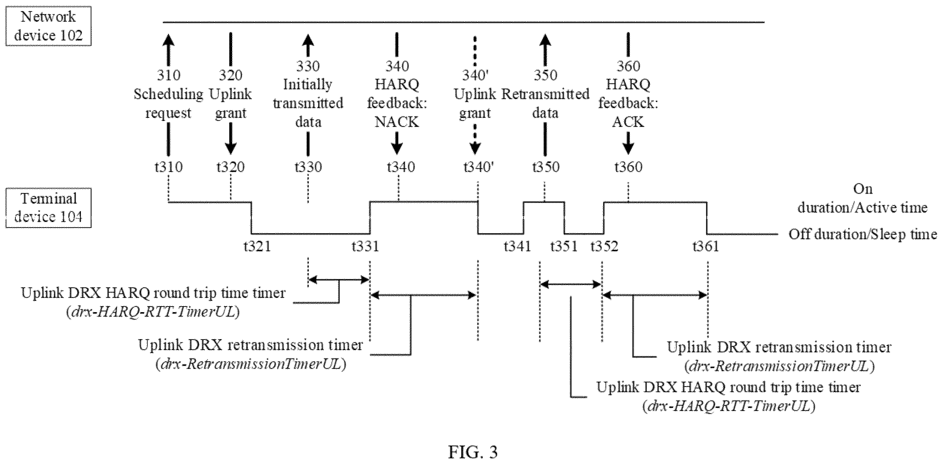

Based on an uplink HARQ process, the following timers are further defined for DRX in the system:
(3) Uplink DRX HARQ round trip time timer (drx-HARQ-RTT-TimerUL): The timer is used to indicate shortest duration before a moment at which the MAC entity expects to receive a grant for uplink HARQ retransmission. The duration may also be considered as a quantity of subframes (subframe) or slots (slot) after which the grant for the UL HARQ retransmission first appears. Each uplink HARQ process corresponds to one drx-HARQ-RTT-TimerUL. As shown in FIG. 3, drx-HARQ-RTT-TimerUL is started after initial data transmission or data retransmission is performed at t330 and t350.
(4) Uplink DRX retransmission timer (drx-RetransmissionTimerUL): The timer is used to indicate maximum duration for waiting to receive a grant (grant) for uplink retransmission. Each uplink HARQ process corresponds to one drx-RetransmissionTimerUL. The timer is started after drx-HARQ-RTT-TimerUL ends, and may be used for receiving an uplink grant because the terminal device is in an active time during running of drx-RetransmissionTimerUL. As shown in FIG. 3, at t331 and t352, drx-RetransmissionTimerUL is started when drx-HARQ-RTT-TimerUL expires, and the timer is stopped when the terminal device receives an uplink grant.

In the wireless communications system, control of the DRX state is relatively complex. In addition to the foregoing timers, other timers such as a downlink DRX HARQ round trip time timer (drx-HARQ-RTT-TimerDL), a downlink DRX retransmission timer (drx-RetransmissionTimerDL), and a random access contention resolution timer (ra-ContentionResolutionTimer) may be further included. As described above, a DRX cycle includes an active time and a sleep time. The active time may include any time in the following, or the terminal device may be in the active time when any one of the following conditions is true:
(1) during a running period of the following timer: drx-onDurationTimer, drx-InactivityTimer, drx-RetransmissionTimerDL, drx-RetransmissionTimerUL, or ra-ContentionResolutionTimer;
(2) when a scheduling request is sent on an uplink control channel, for example, a PUCCH, to request an uplink transmission resource for initial data transmission, and the scheduling request is in a pending (pending) state, where the pending herein refers to that allocation of an uplink transmission resource is not received after the scheduling request is sent; and
(3) in a random access scenario in which a preamble (preamble) is not selected by the MAC entity, a PDCCH indication for initial data transmission is not received after a random access response (random access response) is successfully received.

It should be noted that, with evolution of technologies and update of scenarios, the embodiments of the present invention are not limited thereto, and the active time in the DRX state may further include more other time periods.

In a normal scheduling process, each time before sending uplink data, the terminal device needs to receive an uplink resource grant from the network device, for example, an uplink resource grant for initial data transmission or an uplink grant for data retransmission. The network device may send an uplink grant on a PDCCH by using physical layer signaling, for example, downlink control information (downlink control information, DCI). This manner does not meet a requirement of short-latency services.

It should be noted that, the uplink resource or the downlink resource in the embodiments of this application may include one or more of the following: a time domain resource, a frequency domain resource, an HARQ process, a modulation and coding scheme (modulation code scheme, MCS), and the like.

The time domain resource may include one or more of a subframe, a slot, a cycle, a symbol, and the like.

The frequency domain resource may include one or more of a subcarrier, a bandwidth, a frequency, and the like.

The duration or the time period of the timer in the embodiments of this application may include one or more slots, one or more subframes, one or more symbols, several milliseconds, or the like. The time unit may be a slot (slot), a subframe (subframe), a frame (frame), a symbol, a millisecond (ms), or the like. These units may be converted from each other. For example, in an NR system, one frame includes 10 subframes, each subframe is 1 ms; each slot includes 14 OFDM symbols in a normal cyclic prefix (normal cyclic prefix, NCP), and includes a fixed quantity of 12 OFDM symbols in an extended cyclic prefix (extended cyclic prefix, ECP). Quantities of slots included in each frame and subframe vary with a subcarrier spacing. For example, when the subcarrier spacing is 15 kHz, each subframe includes one slot; when the subcarrier spacing is 60 kHz, each subframe includes four slots. It should be noted that, these examples are merely for ease of understanding, and this application is not limited hereto. A total length of each frame is 10 ms. Different frames include different quantities of slots, but the slots have a same quantity of symbols. Therefore, this means that lengths of symbols are different when subcarrier spacings are different.

In a new air interface technology, a grant free (grant free) scheduling manner is introduced. The network device allocates a grant-free scheduling resource to the terminal device, and the grant-free scheduling resource may be used to transmit a short-latency service. The terminal device may directly use the resource to send uplink data, without a need to wait for an uplink resource grant from the network device. For example, the network device may allocate the grant-free scheduling resource to the terminal device by using radio resource control (radio resource control, RRC) signaling. For another example, the network device may allocate the grant-free scheduling resource to the terminal device by using RRC signaling, and indicate a change of the grant-free scheduling resource by using DCI. In still another possible implementation, the network device may allocate a static resource by using RRC signaling, and allocate a dynamic resource by using DCI. For example, the network device allocates a time domain resource to the terminal device by using RRC signaling, and indicates a frequency domain resource by using DCI. It should be noted that, the examples are all used for description herein, and this application is not limited thereto. In this manner, the terminal device does not need to wait to receive an uplink grant before sending data each time, thereby shortening a data sending time.

FIG. 3 shows an example of an uplink HARQ retransmission process in a DRX state.

310: The terminal device 104 sends a scheduling request to the network device 102, to request an uplink resource for data transmission.

As shown in the FIG. 3, the terminal device 104 sends the scheduling request to the network device at t310.

320: The terminal device 104 receives an uplink grant from the network device 102, where the uplink grant is used to allocate an uplink resource to the terminal device 104.

As shown at t320 in FIG. 3, the network device 102 sends an uplink grant to the terminal device 104, and the terminal device 104 in the active time receives the uplink grant from the network device 102.

The uplink grant is one type of downlink control information DCI, and may include information used to indicate an uplink resource.

The information for indicating the uplink resource may be an identifier or a sequence number for indicating the resource, a resource range, or the like. For example, the information may be a slot number, a subframe number, a quantity of symbols, bandwidth, a subcarrier identifier, a frequency, a frequency band, an MCS index, and an HARQ process identifier. It should be noted that, the examples are all used for description herein, and the embodiments of this application are not limited thereto.

The uplink resource may be a dynamically scheduled resource, and is indicated by using PDCCH physical layer signaling before each time of sending data. For example, the uplink resource is indicated by using DCI before each time of sending data. Alternatively, the uplink resource may be a grant-free scheduling resource, and is indicated by using RRC signaling or by using RRC signaling and physical layer signaling together. For example, a time domain resource such as a cycle is indicated by using RRC signaling. For another example, a frequency domain resource may be indicated by using RRC signaling or physical layer signaling such as DCI. For another example, an MCS may be indicated by using RRC signaling or DCI. For another example, an HARQ process identifier may be indicated by using RRC signaling.

330: The terminal device 104 initially transmits data based on the uplink resource indicated in step 320, and starts a timer drx-HARQ-RTT-TimerUL.

During running of the timer drx-HARQ-RTT-TimerUL, for example, in a time period from t330 to t331, if the time period is not an active time, the terminal device may sleep and not monitor a PDCCH.

After the timer drx-HARQ-RTT-TimerUL expires, the terminal device 104 starts drx-RetransmissionTimerUL, and monitors the PDCCH, as shown at t331 in FIG. 3.

340: The terminal device 104 receives HARQ feedback information from the network device 102.

The network device 102 sends the HARQ feedback information to the terminal device 104, to feedback information about the data sent by the terminal device 104. If the network device 102 cannot correctly receive the uplink data sent by the terminal device 104, for example, fails to receive the data, or the network device 102 receives the data but cannot successfully decode the data, the network device 102 sends a negative acknowledgment NACK, so that the terminal device 104 learns that retransmission needs to be performed. If the network device 102 receives the uplink data sent by the terminal device and can successfully decode the uplink data, the network device 102 sends an acknowledgment ACK. In this way, the terminal device 104 may not need to perform retransmission.

In the process shown in FIG. 3, the network device 102 sends, at t340, a negative acknowledgment for initial data transmission, and sends, at t360, an acknowledgment for data retransmission. It should be noted that, this is merely an example, and this application is not limited hereto.

In a possible implementation, the network device 102 may further send an uplink grant to the terminal device 104, as shown in 340', where the uplink grant is used to indicate an uplink resource used for data retransmission. The terminal device 104 may learn, after receiving the information, that retransmission needs to be performed. At t340', the terminal device 104 stops the timer drx-RetransmissionTimerUL. If no other condition that meets the active time is true at this time, the terminal device 104 may enter a sleep state and wait until the active time starts, as shown at t341 in FIG. 3.

350: The terminal device 104 retransmits the data, and starts the timer drx-HARQ-RTT-TimerUL.

If a grant-free scheduling resource has been allocated to a terminal device that uses grant-free scheduling, the terminal device may determine an uplink resource used for retransmission in the grant-free scheduling resource, and perform retransmission.

A terminal device that uses normal scheduling may retransmit the data at t350 based on the uplink resource indicated in step 340'.

It may be understood that initially transmitted content and retransmitted content of the data may be different or may be the same. For example, a redundancy version 0 of the data is used in the initial transmission, and a redundancy version 2 of the data is used in the retransmission. For another example, a redundancy version 0 of the data is used in the initial transmission, a redundancy version 3 of the data is used in the first retransmission, and the redundancy version 0 of the data is used in the second retransmission. Each redundancy version is a part of a data block including information bits of data and redundancy bits of the data. For example, the network device 102 may combine and decode a plurality of received redundancy versions to obtain the data, or obtain information bits of the data.

During running of the timer drx-HARQ-RTT-TimerUL, for example, in a time period from t350 to t352, if the time period is not an active time, the terminal device may sleep and not monitor a PDCCH.

After the timer drx-HARQ-RTT-TimerUL expires, the terminal device 104 starts drx-RetransmissionTimerUL, and monitors the PDCCH, as shown at t352 in FIG. 3.

360: The terminal device 104 receives HARQ feedback information from the network device 102.

For the HARQ feedback information sent by the network device 102 to the terminal device 104, refer to the description in step 340. Details are not described herein again. As shown in FIG. 3, the terminal device 104 receives an acknowledgment at t360, and the terminal device 104 may not need to perform retransmission. After the timer drx-RetransmissionTimerUL expires, if no other condition that meets the active time is true, the terminal device 104 may enter the sleep state and wait until the active time starts.

It may be understood that there may be more than data retransmission in step 350. If the network device sends a negative acknowledgment for a data retransmission, the terminal device 104 may continue to retransmit the data, that is, repeat steps 340 and 350, until an acknowledgment is received, for example, step 360, or until the retransmission timer expires.

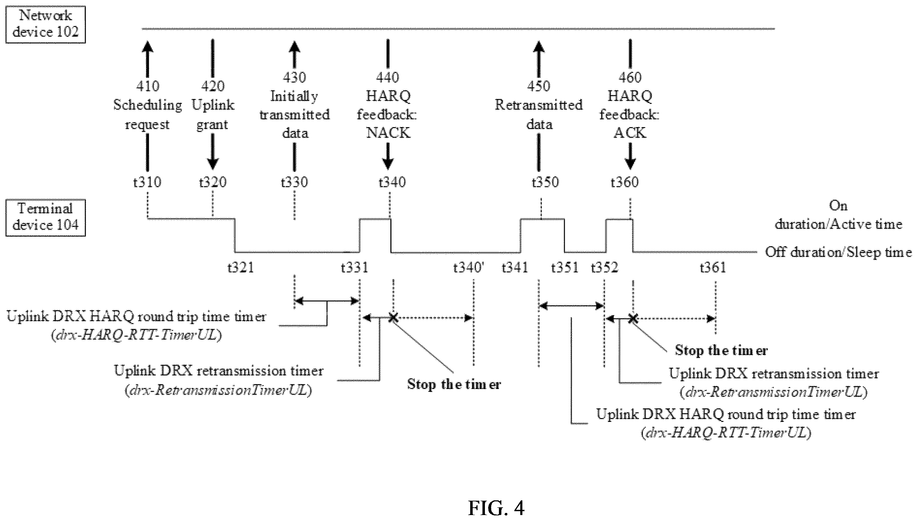

If a grant-free scheduling resource has been allocated to the terminal device 104, after receiving the HARQ feedback information, the terminal device 104 may determine whether retransmission of the data or initial transmission of another piece of data needs to be performed on the grant-free scheduling resource, without a need to wait for an uplink grant. However, in the process shown in FIG. 3, after receiving the HARQ feedback information, the terminal device 104 is still in the active time in which the drx-RetransmissionTimerUL runs. The terminal device 104 cannot enter the sleep state even if no other condition that meets the active time is true. If the timer drx-RetransmissionTimerUL can be stopped after the HARQ feedback information is received at t340 or t360, the terminal device 104 may enter the sleep state when no other condition that meets the active time is true, to further reduce power consumption. FIG. 4 shows an improvement of the process shown in FIG. 3 in the grant-free scheduling scenario. In the grant-free scheduling scenario, the network device may indicate, by using RRC signaling or by using RRC signaling in combination with DCI, a resource used for a plurality of times of data transmission, and does not need to indicate, by using DCI on a PDCCH before each time of data transmission, a resource used for a current time of data transmission. Step 410 to step 430 and step 450 are the same as corresponding step 310 to step 330 and step 350 in FIG. 3. Different from FIG. 3, in FIG. 4, after the HARQ feedback information is received in step 440 and step 460, the timer drx-RetransmissionTimerUL is stopped. Therefore, the terminal device 104 may enter a sleep state. It may be understood that there may be more than one time of retransmission in step 450. If the network device sends a negative acknowledgment for retransmission, the terminal device 104 may continue to retransmit the data, that is, repeat steps 440 and 450, until an acknowledgment is received, for example, step 460, or until the retransmission timer expires.

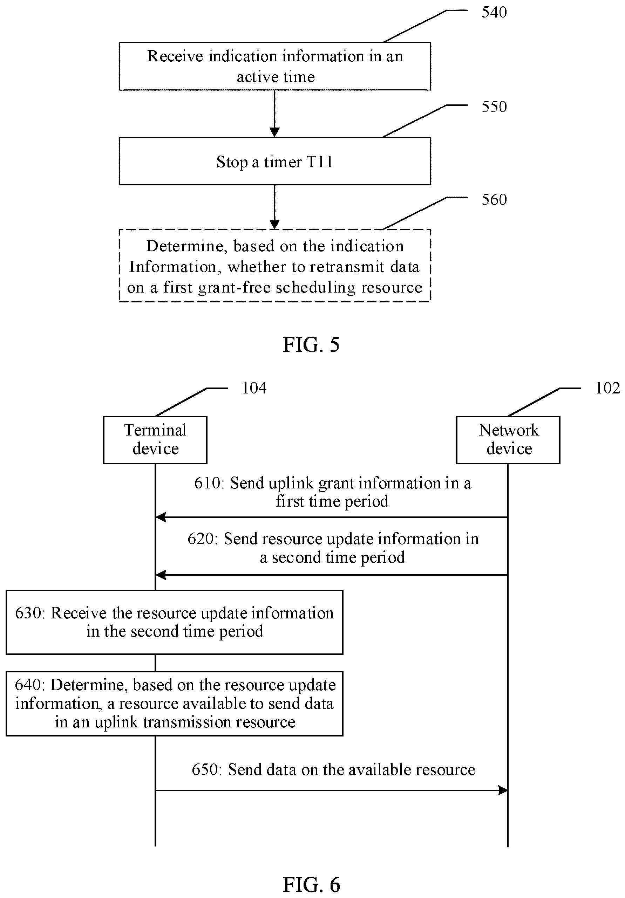

FIG. 5 is a schematic flowchart of a discontinuous reception communication method according to an embodiment of the present invention. As shown in FIG. 5, the method includes the following steps.

540: A terminal device 104 receives, in an active time, indication information sent by a network device 102, where the indication information includes HARQ feedback information for initial transmission or retransmission of data of the terminal device.

The active time is a time period existing after the initial transmission or the retransmission performed by the terminal device 104, and is controlled by starting a timer T11, so that the terminal device 104 receives, during running of the timer T11, the indication information sent by the network device 102.

The indication information may be downlink feedback information DFI, and includes the HARQ feedback information, for example, an acknowledgment or a negative acknowledgment, for the initial transmission or the retransmission of the data of the terminal device 104. The indication information may further include a carrier indicator field (carrier indicator field, CIF), transmit power control (transmit power control, TPC), a CIF and TPC, or the like.

In a possible implementation, the indication information may be obtained after the network device 102 scrambles the foregoing information by using a cell radio network temporary identifier (cell radio network temporary identifier, C-RNTI). After receiving the indication information, the terminal device 104 may descramble the foregoing information, and so on.

The initial transmission or the retransmission of the data of the terminal device 104 may be performed on a resource allocated during normal scheduling, or may be performed on a resource allocated during grant-free scheduling.

550: The terminal device 104 stops the timer T11.

The terminal device 104 stops the timer T11. If a current moment is not in the active time, the terminal device 104 may enter a sleep state.

If the indication information indicates an acknowledgment, the terminal device 104 does not need to perform retransmission, and if the terminal device 104 has no other data that needs to be transmitted, the active time may be ended in advance, and there is no need to wait until the timer T11 expires.

If the indication information is a negative acknowledgment, or although the indication information is a negative acknowledgment, the terminal device 104 still needs to transmit other data:
during normal scheduling, if the terminal device 104 has not received an uplink grant in this case, the terminal device 104 may wait for a next active time to monitor a PDCCH channel, and receive the uplink grant sent by the network device; or
during grant-free scheduling, the terminal device 104 may perform retransmission by using a grant-free scheduling resource, and therefore does not need to wait for an uplink grant.

It can be learned that, in the foregoing method, the timer is stopped immediately when the HARQ feedback information for the data is received during HARQ transmission, and the terminal device is allowed to enter the sleep state. In this way, duration in which the terminal device is in an active state can be shortened, and power consumption can be reduced.

Optionally, the terminal device 104 may alternatively determine, based on the indication information or depending on whether a grant-free scheduling resource is allocated, whether to stop the timer T11.

In a possible implementation, not forming part of the claimed invention, the terminal device 104 determines, based on the indication information, that the terminal device does not need to wait for the uplink grant, to be specific, the indication information is an acknowledgment, or the indication information is an acknowledgment and there is no other data that needs to be transmitted, and the terminal device may stop the timer T11.

In the claimed invention, if the grant-free scheduling resource has been allocated to the terminal device 104, the terminal device 104 stops the timer T11. In this manner, once determining, based on the indication information, that retransmission of the data or initial transmission of other data is needed, the terminal device performs transmission by using an allocated grant-free scheduling resource, without a need to wait for an uplink grant. This manner does not affect the normal scheduling scenario, and the terminal device may still wait to receive an uplink grant in drx-RetransmissionTimerUL, to avoid that the network device fails to send the uplink grant in this time period and resends the uplink grant in another active time.

In the claimed invention, in the grant-free scheduling scenario, the communication method further includes the following step:
560: The terminal device 104 determines, based on the indication information, whether to retransmit the data on a first grant-free scheduling resource.

If the indication information includes the negative acknowledgment, the terminal device 104 determines that the data needs to be retransmitted. If the grant-free scheduling resource has been allocated to the terminal device 104, the terminal device 104 determines in the grant-free scheduling resource, the first grant-free scheduling resource used to retransmit the data.

If the indication information includes the acknowledgment, the terminal device 104 determines that the data does not need to be retransmitted. Further, the terminal device 104 determines whether there is other data that needs to be transmitted. If there is no other data that needs to be transmitted, the terminal device 104 may determine, depending on whether the current moment is in the active time, whether the terminal device 104 needs to enter the sleep state. If there is data that needs to be transmitted, and the grant-free scheduling resource has been allocated to the terminal device 104, the first grant-free scheduling resource may be selected from the grant-free scheduling resource for new data transmission.

Optionally, before step 540, the method may further include the following step:
530: The terminal device 104 starts the timer T11, to monitor a PDCCH.

In a possible implementation, the timer T11 may be drx-RetransmissionTimerUL, and the timer may be started after drx-HARQ-RTT-TimerUL expires, as shown in step 430 or 450 in FIG. 4. Certainly, the timer T11 may alternatively be another timer. When the timer T11 is running, that is, in the active time, the terminal device 104 may monitor a physical downlink control channel PDCCH.

Optionally, before step 530, the method may further include: initially transmitting or retransmitting the data, and starting the timer drx-HARQ-RTT-TimerUL after the initial transmission or the retransmission.

Optionally, before step 530, the method may further include steps 410 and 420 in FIG. 4, to obtain an uplink grant for the initial transmission or the retransmission of the data.

According to the method in this embodiment, after receiving the feedback information for the transmitted data, the terminal device is allowed to enter the sleep state as soon as possible, and does not need to continue to monitor the PDCCH or wait for the uplink grant. In this way, duration in which the terminal device is in an active state can be shortened, and power consumption can be reduced.

In discontinuous reception mode, the terminal device may be in the sleep state before a data sending occasion arrives. If the network device reallocates the resource that has been allocated for the data, and the terminal device does not update resource information in time, a failure in data sending may be caused. It may be understood that the network device may reallocate the resource to another terminal device, or may allocate the resource to another high-priority service of the same terminal device. The embodiments of the present invention are not limited thereto.

FIG. 6 is a schematic flowchart of a discontinuous reception communication method according to another embodiment of the present invention. As shown in FIG. 6, the method includes the following steps.

610: A network device 102 sends uplink grant information to a terminal device 104 in a first time period.

The network device 102 determines that the terminal device 104 is in an active time in the first time period, and sends the uplink grant information to the terminal device 104, where the uplink grant information is used to allocate an uplink transmission resource. For example, the network device 102 allocates resources 0, 1, 2, and 3 to the terminal device 104.

A plurality of timers of the terminal device in a DRX state may be configured by the network device. Therefore, the network device may determine, based on a condition for the terminal device to be in the active time and duration and a start time of a corresponding timer, whether the terminal device is in the active time, so that in the DRX state, the network device matches the terminal device in terms of information sending and receiving and an active time.

The terminal device 104 receives the uplink grant information in the first time period.

The first time period may be the active time of the terminal device 104. For the active time of the terminal device 104, refer to the foregoing description. Details are not described herein again. An end moment of the first time period is t1.

In a possible implementation, the terminal device 104 receives the uplink grant, and stops the corresponding timer, for example, drx-RetransmissionTimerUL, as shown at t340 in FIG. 3. The end moment t1 of the first time period is a moment at which the terminal device 104 receives the uplink grant.

In another possible implementation, the terminal device 104 receives the uplink grant, but is still in the active time. After the timer expires, the terminal device may enter a sleep state, as shown at t321 in FIG. 3. In this case, the end moment t1 of the first time period is an end moment of the active time.

The terminal device 104 may determine, based on the uplink grant information, that an end moment of the uplink transmission resource is t2, where the end moment of the uplink transmission resource is not earlier than the end moment of the first time period, that is, t2≥t1.

For example, a subcarrier spacing is 30 kHz, one subframe includes two slots, the first time period includes three slots: slots 0 and 1 of a subframe 0 and a slot 0 of a subframe 1, the end moment t1 is the slot 0 of the subframe 1, and 14 symbols are allocated for the uplink transmission resource in the slot 1 of the subframe 2, that is, the end moment of the uplink transmission resource is the slot 1 of the subframe 2. In this case, an interval between t2 and t1 is three slots. It should be noted that, for ease of description herein, an example in which the first time period and the uplink transmission resource are in a same frame is used. The first time period and the uplink transmission resource may alternatively be in different frames. For another example, a subcarrier spacing is 120 kHz, one subframe includes eight slots, the first time period includes 12 slots: slots 0 to 7 of a subframe 0 and slots 0 to 3 of a subframe 1, the end moment t1 is the slot 3 of the subframe 1, and 28 symbols are allocated for the uplink transmission resource in slots 0 and 1 of a subframe 1 of a next frame, that is, the end moment of the uplink transmission resource is in the slot 1 of the subframe 1 of the next frame. In this case, an interval between t2 and t1 is 78 slots. The foregoing descriptions are all examples, and the embodiments of this application are not limited thereto.

620: The network device 102 sends resource update information to the terminal device 104, where the resource update information is used to indicate an available status of a part or all of the uplink transmission resource.

The network device 102 may send the resource update information to the terminal device 104 periodically.

Alternatively, the network device 102 may send the resource update information to the terminal device 104 when determining that the available status of the part or all of the uplink transmission resource allocated to the terminal device 104 changes.

The available status may be one of the following: preempted, invalid, or available.

After determining that the status changes, the network device may send the resource update information on an occasion before a data sending occasion of the terminal device or in an active time during data sending.

630: The terminal device receives the resource update information in a second time period.

A start moment of the second time period is t3, an end moment of the second time period is t4, t3≥t1, and t4≤t2.

The start moment t3 of the second time period is not earlier than the end moment t1 of the first time period, and the end moment t4 of the second time period is not later than the end moment t1 of the first time period.

Still using the example in step 610 as an example, the end moment t1 of the first time period is the slot 0 of the subframe 1, and the end moment of the uplink transmission resource is the slot 1 of the subframe 2. In this case, the start moment t3 of the second time period is not earlier than the slot 0 of the subframe 1, and the end moment t4 is not later than the slot 1 of the subframe 2.

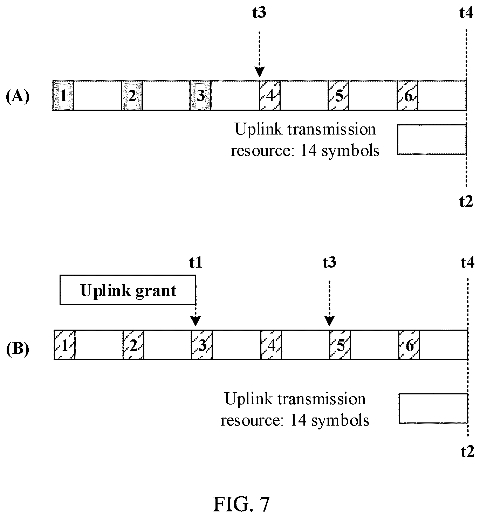

FIG. 7(A) shows an example of the second time period. The end moment t4 of the second time period is the same as the end moment t2 of the uplink transmission resource, and three slots before the end moment t2 of the uplink transmission resource are the second time period. An interval between the end moment t4 of the second time period and the end moment t2 of the uplink transmission resource is x. Therefore, duration of the second time period is three slots, and an interval between the end moment t4 of the second time period and the end moment t2 of the uplink resource is 0.

FIG. 7(B) shows another example of the second time period. The start moment t3 of the second time period is two slots after the end moment t1 of the first time period, and duration m is two slots.

In a possible implementation, a timer T21 whose duration is m is started at the start moment t3 of the second time period, and the duration m meets m = t4 - t3. Therefore, the terminal device is in the active time, and can monitor a PDCCH and receive the resource update information. The active time of the terminal device may also include a running period of the timer T21. It should be noted that, a time unit of m may be any time unit of the time period or the timer enumerated in this specification, for example, a slot, a millisecond, or a symbol.

In a possible implementation, maximum duration M of the timer T21 and a location of the end moment t4 of the second time period may be indicated by the network device to the terminal device or defined by a system. The terminal device may determine the end moment t4 of the second time period based on the location of the end moment t4 of the second time period, and the duration m of the timer T21 is a smaller value of M and t4-t1. The location of the end moment t4 of the second time period may be an absolute location of the end moment t4, for example, a j^{th} slot of an i^{th} subframe. The location of the end moment t4 of the second time period may alternatively be an interval between the end moment t4 and the end moment t2 of the uplink transmission resource, namely, a quantity of time units by which t4 is earlier than t2, for example, two slots by which t4 is earlier than t2.

In another possible implementation, maximum duration M of the timer T21 and a location of the start moment t3 of the second time period may be indicated by the network device to the terminal device or defined by a system. The terminal device may determine the start moment t3 of the second time period based on the location of the start moment t3 of the second time period, and the duration m of the timer T21 is a smaller value of M and t2-t3. The location of the start moment t3 of the second time period may be an absolute location of the start moment t3, for example, a j^{th} slot of an i^{th} subframe. The location of the start moment t3 of the second time period may alternatively be an interval between the start moment t3 and the end moment t1 of the first time period, namely, a quantity of time units by which t3 is later than t1, for example, 14 symbols by which t3 is later than t1.

It should be noted that, the foregoing descriptions are all examples, and the embodiments of this application are not limited thereto.

Further, if the resource update information is received during running of the timer T21, the timer T21 is stopped. If no other condition that meets the active time is true, the terminal device may enter the sleep state.

640: The terminal device determines, based on the resource update information, a resource available to send data in the uplink transmission resource.

The terminal device may determine, based on the available status that is of the part or all of the resource and that is in the resource update information, the resource available to send data in the allocated uplink transmission resource. For example, if the network device determines that resources 1 and 3 allocated in step 610 need to be allocated to another terminal device, the network device sends the resource update information to the terminal device in step 620. In a possible implementation, the resource update information indicates available statuses of resources 0 to 3, where the resources 1 and 3 are in a preempted state, and the resources 0 and 2 are in an available state. The terminal device may update an available status of each resource based on the resource information, and determine that the resources 0 and 2 in the available state are used to send data. In another possible implementation, available statuses of resources 0 and 2 do not change, the resource update information indicates resources 1 and 3 whose available statuses change, and the resources 1 and 3 are in a preempted state. The terminal device may determine, based on the information, the resources 0 and 2 are available to send data. In still another possible implementation, the resource update information indicates available resources 0 and 2, and does not include preempted resources 1 and 3. The terminal device determines, based on the information, that the resources 0 and 2 are resources available to send data. It should be noted that, this is merely an example, and the embodiments of the present invention are not limited thereto.

Optionally, the method further includes the following step:
650: The network device receives data of the terminal device on the available resource in the uplink transmission resource.

If the terminal device determines, in step 640, that there are available resources for sending data, the terminal device sends the data on these resources when a data sending occasion arrives.

The network device may receive, on the available resource, the data sent by the terminal device.

It should be noted that, this embodiment of the present invention is described from a perspective of device interaction. The terminal device and the network device may separately perform respective method steps to complete the method provided in this embodiment of the present invention.

According to the method provided in this embodiment of the present invention, when the uplink transmission resource of the terminal device in DRX mode is preempted, the terminal device can receive the resource update information in time, and determine the resource available to send data, thereby avoiding a resource occupation conflict during data transmission of different services or different terminal devices, and also avoiding interference to data transmission of another terminal device.

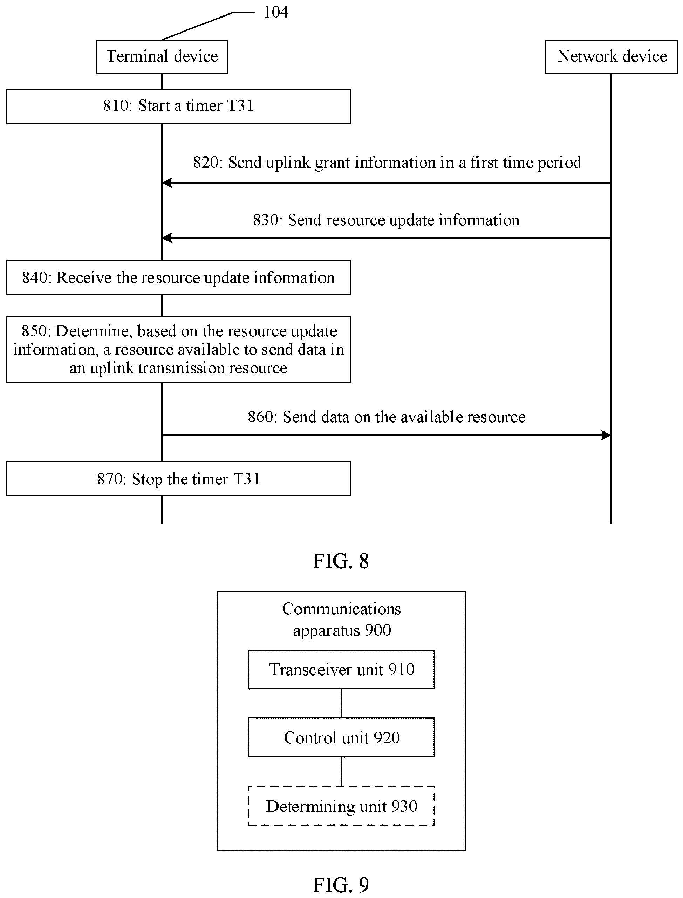

FIG. 8 is a schematic flowchart of a discontinuous reception communication method according to another embodiment of the present invention. As shown in FIG. 8, the method includes the following steps.

810: A terminal device 104 starts a timer T31, where the timer T31 is used to monitor a physical downlink control channel PDCCH.

The terminal device 104 starts the timer T31, is in an active time, and can monitor the PDCCH and receive resource update information. The active time of the terminal device may also include a running period of the timer T31.

In a possible implementation, the timer T31 may be a timer drx-RetransmissionTimerUL. Certainly, the timer T31 may alternatively be a timer that controls the active time of the terminal device.

820: A network device 102 sends uplink grant information to the terminal device 104 in a first time period.

The network device 102 determines that the terminal device 104 is in the active time, and sends the uplink grant information to the terminal device 104, where the uplink grant information is used to allocate an uplink transmission resource.

The terminal device 104 receives the uplink grant information during running of the timer T31. The terminal device does not stop the timer T31, and continues to be in the active time.

For example, the timer T31 is drx-RetransmissionTimerUL. After receiving the uplink grant, the terminal device usually needs to stop drx-RetransmissionTimerUL. However, according to the method in this embodiment, the terminal device does not stop the timer, and continues to be in the active time.

830: The network device 102 sends the resource update information to the terminal device 104, where the resource update information is used to indicate an available status of a part or all of the uplink transmission resource.

The network device may send the resource update information to the terminal device periodically.

Alternatively, the network device may send the resource update information to the terminal device 104 when determining that the available status of the part or all of the uplink transmission resource allocated to the terminal device 104 changes.

The available status may be one of the following: preempted, invalid, or available.

For the step of sending the resource update information by the network device, refer to step 620 in the foregoing embodiment.

840: The terminal device 104 receives the resource update information.

850: The terminal device determines, based on the resource update information, a resource available to send data in the uplink transmission resource.

For the step of determining, by the terminal device based on the resource update information, a resource available to send data in the uplink transmission resource, refer to the description in step 640 in the foregoing method embodiment. Details are not described herein again.

Optionally, the method further includes the following step:
860: The terminal device sends data on the resource available to send data.

If the terminal device determines, in step 850, that there are available resources for sending data, the terminal device sends the data on these resources when a data sending occasion arrives.

Optionally, the method further includes the following step:
870: If the timer T31 is in a running period, the terminal device stops the timer T31.

During running of the timer T31, if the terminal device determines, in step 850, that there is no available resource for sending data, the terminal device may stop the timer T31.

If the terminal device determines, in step 850, that there is an available resource for sending data, the terminal device may stop the timer T31 after completing sending of the data in step 860.

After the timer T31 is stopped, if no other condition that meets the active time is true for the terminal device, the terminal device may enter a sleep state.

According to the method provided in this embodiment of the present invention, when the uplink transmission resource of the terminal device in DRX mode is preempted, the terminal device can receive the resource update information in time, and determine the resource available to send data, thereby avoiding a resource occupation conflict during data transmission of different services or different terminal devices, and also avoiding interference to data transmission of another terminal device.

FIG. 9 is a schematic structural diagram of a communications apparatus 900. The apparatus 900 may be configured to implement the method performed by the terminal device 104 in the embodiment shown in FIG. 5. For details, refer to the description in the foregoing method embodiment. As shown in FIG. 9, the apparatus includes: a transceiver unit 910, configured to receive indication information from a network device; and a control unit 920, configured to stop a timer T11.

Optionally, the communications apparatus further includes a determining unit 930, configured to determine, based on the received indication information, whether to retransmit data on a first grant-free scheduling resource.

Optionally, the transceiver unit 910 may be further configured to initially transmit or retransmit the data, and receive an uplink grant for the initial transmission or the retransmission of the data.

Optionally, the control unit 920 may be further configured to start the timer T11, and control the communications apparatus 900 to be in an active time.

It may be understood that the communications apparatus 900 may include units configured to perform the method performed by the terminal device 104 in FIG. 5. In addition, the units in the communications apparatus 900 and the foregoing other operations and/or functions are separately used to implement a corresponding procedure of the communication method in FIG. 5. A process in which the units perform the foregoing corresponding steps is described in the foregoing method embodiment, and details are not described herein again.

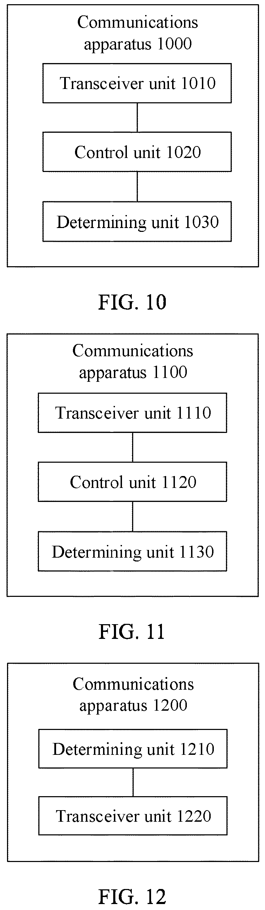

FIG. 10 is a schematic structural diagram of a communications apparatus 1000. The apparatus 1000 may be configured to implement the method performed by the terminal device 104 in the embodiment shown in FIG. 6. For details, refer to the description in the foregoing method embodiment. As shown in FIG. 10, the apparatus includes a transceiver unit 1010, configured to receive uplink grant information from a network device in a first time period and receive resource update information from the network device in a second time period, where an end moment of the first time period is t1, the uplink grant information is used to allocate an uplink transmission resource, an end moment of the uplink transmission resource is t2, t2≥t1, a start moment of the second time period is t3, an end moment of the second time period is t4, t3≥t1, and t4≤t2; a control unit 1020, configured to control the transceiver unit 1010 to receive the resource update information from the network device in the second time period; and a determining unit 1030, configured to determine, based on the resource update information, a resource available to send data in the uplink transmission resource.

Optionally, the transceiver unit 1010 may be further configured to: when it is determined that there are available resources for sending data, send data on these resources on a data sending occasion.

Optionally, the control unit 1020 may start, at the start moment t3 of the second time period, the timer T21 whose duration is m slots, so that the communications apparatus is in an active time.

It may be understood that the communications apparatus 1000 may include units configured to perform the method performed by the terminal device 104 in FIG. 6. In addition, the units in the communications apparatus 1000 and the foregoing other operations and/or functions are separately used to implement a corresponding procedure of the communication method in FIG. 6. A process in which the units perform the foregoing corresponding steps is described in the foregoing method embodiment, and details are not described herein again.

FIG. 11 is a schematic structural diagram of a communications apparatus 1100. The apparatus 1100 may be configured to implement the method performed by the terminal device 104 in the embodiment shown in FIG. 8. For details, refer to the description in the foregoing method embodiment. As shown in FIG. 11, the apparatus includes a transceiver unit 1110, configured to receive uplink grant information and resource update information from a network device, where an end moment of a first time period is t1, and the uplink grant information is used to allocate an uplink transmission resource; a control unit 1120, configured to: start a timer T31, so that the communications apparatus 1100 is in an active time, and control the transceiver unit 1110 to receive the uplink grant information and the resource update information from the network device in the active time; and a determining unit 1130, configured to determine, based on the resource update information, a resource available to send data in the uplink transmission resource.

Optionally, the transceiver unit 1110 may be further configured to: when it is determined that there are available resources for sending data, send data on these resources on a data sending occasion.

Optionally, the control unit 1120 may stop the timer T31 after the determining unit 1130 determines that there is no available resource for sending data or after the transceiver unit 1110 sends the data.

It may be understood that the communications apparatus 1100 may include units configured to perform the method performed by the terminal device 104 in FIG. 8. In addition, the units in the communications apparatus 1100 and the foregoing other operations and/or functions are separately used to implement a corresponding procedure of the communication method in FIG. 8. A process in which the units perform the foregoing corresponding steps is described in the foregoing method embodiment, and details are not described herein again.

FIG. 12 is a schematic structural diagram of a communications apparatus 1200. The apparatus 1200 may be configured to implement the method performed by the network device 102 in the embodiment shown in FIG. 6 or FIG. 8. For details, refer to the description in the foregoing method embodiment. As shown in FIG. 12, the apparatus includes: a determining unit 1210, configured to determine that a terminal device is in an active time; and a transceiver unit 1220, configured to send uplink grant information and resource update information when the determining unit 1210 determines that the terminal device is in the active time.

It may be understood that the communications apparatus 1200 may include units configured to perform the method performed by the network device 102 in FIG. 6 or FIG. 8. In addition, the units in the communications apparatus 1200 and the foregoing other operations and/or functions are separately used to implement a corresponding procedure of the communication method in FIG. 6 or FIG. 8. A process in which the units perform the foregoing corresponding steps is described in the foregoing method embodiment, and details are not described herein again.

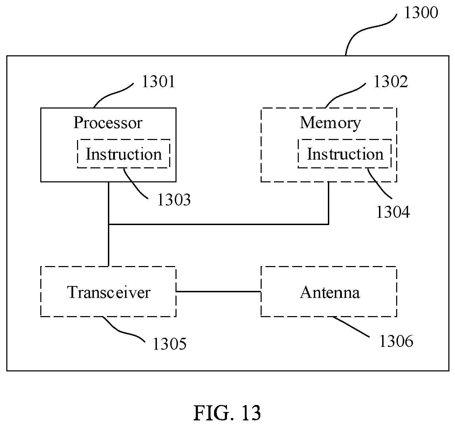

FIG. 13 is a schematic structural diagram of a communications apparatus 1300. The apparatus 1300 may be configured to implement the methods described in the foregoing method embodiments. For details, refer to the description in the foregoing method embodiments. The communications apparatus 1300 may be a chip, a base station, a terminal, or another network device. Alternatively, the communications apparatus 1300 may be the terminal device 104 or the network device 102 in FIG. 1.

The communications apparatus 1300 includes one or more processors 1301. The processor 1301 may be a general-purpose processor, a dedicated processor, or the like, for example, may be a baseband processor or a central processing unit. The baseband processor may be configured to process a communication protocol and communication data. The central processing unit may be configured to: control the communications apparatus (such as the base station, the terminal, or the chip), execute a software program, and process data of the software program.

The communications apparatus 1300 includes one or more processors 1301. In a possible design, the one or more processors 1301 may implement the method performed by the terminal device 104 in the embodiment shown in FIG. 5. Optionally, in addition to implementing the method performed by the terminal device 104 in the embodiment shown in FIG. 5, the processor 1301 may further implement another function. The communications apparatus 1300 receives indication information in an active time, and stops a timer T11. Optionally, the communications apparatus 1300 determines, based on the indication information, whether to retransmit data on a first grant-free scheduling resource.

In a possible design, the one or more processors 1301 may implement the method performed by the terminal device 104 in the embodiment shown in FIG. 6. Optionally, in addition to implementing the method performed by the terminal device 104 in the embodiment shown in FIG. 6, the processor 1301 may further implement another function. The communications apparatus 1300 receives uplink grant information in a first time period, where the uplink grant information is used to allocate an uplink transmission resource, an end moment of the first time period is t1, an end moment of the uplink transmission resource is t2, and t2≥t1; receives resource update information in a second time period, where a start moment of the second time period is t3, an end moment of the second time period is t4, t3≥t1, and t4≤t2; and determines, based on indication information, a resource available to send data in the uplink transmission resource.

In a possible design, the one or more processors 1301 may implement the method performed by the terminal device 104 in the embodiment shown in FIG. 8. Optionally, in addition to implementing the method performed by the terminal device 104 in the embodiment shown in FIG. 8, the processor 1301 may further implement another function. The communications apparatus 1300 starts a timer T31, and is in an active time; receives uplink grant information during running of the timer T31, where the uplink grant information is used to allocate an uplink transmission resource; receives resource update information; and determines, based on indication information, a resource available to send data in the uplink transmission resource.

In a possible design, the one or more processors 1301 may implement the method performed by the network device 102 in the embodiment shown in FIG. 6 or FIG. 8. Optionally, in addition to implementing the method performed by the network device 102 in the embodiment shown in FIG. 6 or FIG. 8, the processor 1301 may further implement another function. The communications apparatus 1300 determines that a terminal device is in an active time, and sends uplink grant information to the terminal device, where the uplink grant information is used to allocate an uplink transmission resource; and sends resource update information to the terminal device, where the resource update information is used to indicate an available status of a part or all of the uplink resource.

In an optional design, the processor 1301 may also include an instruction 1303. The instruction may be run on the processor, so that the communications apparatus 1300 performs the methods described in the foregoing method embodiments.

In another possible design, the communications apparatus 1300 may further include a circuit, and the circuit may implement a function in the foregoing method embodiments. Optionally, the communications apparatus 1300 may include one or more memories 1302. The memory stores an instruction 1304, and the instruction may be run on the processor, so that the communications apparatus 1300 performs the methods described in the foregoing embodiments. Optionally, the memory may further store data. Optionally, the processor may also store an instruction and/or data. The processor and the memory may be separately disposed, or may be integrated together. Optionally, the one or more memories 1302 may store an uplink transmission resource, an available status of the uplink transmission resource, and the like.

Optionally, the communications apparatus 1300 may further include a transceiver 1305 and an antenna 1306. The processor 1301 may be referred to as a processing unit, and controls the communications apparatus (the terminal or the base station). The transceiver 1305 may be referred to as a transceiver unit, a transceiver machine, a transceiver circuit, a transceiver, or the like, and is configured to implement sending and receiving functions of the communications apparatus through the antenna 1306.

A person skilled in the art may further understand that various illustrative logical blocks (illustrative logical block) and steps (step) that are listed in the embodiments of the present invention may be implemented by using electronic hardware, computer software, or a combination thereof. Whether the functions are implemented by using hardware or software depends on particular applications and a design requirement of the entire system. A person skilled in the art may use various methods to implement the described functions for each particular application, but it should not be considered that the implementation goes beyond the scope of the embodiments of the present invention.

The various illustrative logical units and circuits described in the embodiments of the present invention may implement or operate the described functions by using a general-purpose processor, a digital signal processor, an application-specific integrated circuit (ASIC), a field programmable gate array (FPGA) or another programmable logical apparatus, a discrete gate or transistor logic, a discrete hardware component, or a design of any combination thereof. The general-purpose processor may be a microprocessor. Optionally, the general-purpose processor may alternatively be any conventional processor, controller, microcontroller, or state machine. The processor may also be implemented by a combination of computing apparatuses, such as a digital signal processor and a microprocessor, a plurality of microprocessors, one or more microprocessors in combination with a digital signal processor core, or any other similar configuration.

Steps of the methods or algorithms described in the embodiments of the present invention may be directly embedded into hardware, an instruction executed by the processor, or a combination thereof. The memory may be a RAM memory, a flash memory, a ROM memory, an EPROM memory, an EEPROM memory, a register, a hard disk, a removable magnetic disk, a CD-ROM, or a storage medium of any other form in the art. For example, the memory may connect to the processor so that the processor may read information from the memory and write information to the memory. Alternatively, the memory may be integrated into the processor. The processor and the memory may be arranged in an ASIC, and the ASIC may be arranged in UE. Optionally, the processor and the memory may be arranged in different components of the UE.

With descriptions of the foregoing embodiments, a person skilled in the art may clearly understand that the present invention may be implemented by hardware, firmware or a combination thereof. When a software program is used to implement the embodiments, the embodiments may be implemented completely or partially in a form of a computer program product. The computer program product includes one or more computer instructions (which may also be referred to as a program or code). When the computer instructions are loaded and executed on the computer, the procedure or functions according to the embodiments of the present invention are all or partially generated. When the present invention is implemented by a software program, the foregoing functions may also be stored in a computer-readable medium or transmitted as one or more instructions or code in the computer-readable medium. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. The computer-readable medium includes a computer storage medium and a communications medium, where the communications medium includes any medium that enables a computer program to be transmitted from one place to another. The storage medium may be any available medium accessible to a computer. The following provides an example but does not impose a limitation: The computer-readable medium may include a RAM, a ROM, an EEPROM, a CD-ROM, another compact disc storage or magnetic disk storage medium or another magnetic storage device, or any other medium that can carry or store expected program code in a form of an instruction or a data structure and can be accessed by a computer. In addition, any connection may be appropriately defined as a computer-readable medium. For example, if software is transmitted from a website, a server, or another remote source by using a coaxial cable, an optical fiber/cable, a twisted pair, a digital subscriber line (DSL) or wireless technologies such as infrared ray, radio and microwave, and the coaxial cable, optical fiber/cable, twisted pair, DSL or wireless technologies such as infrared ray, radio, and microwave are included in the definition of the medium to which they belong. For example, a disk (Disk) and a disc (disc) used in the present invention include a compact disc (CD), a laser disc, an optical disc, a digital versatile disc (DVD), a floppy disk, and a Blu-ray disc. The disk usually copies data by a magnetic means, and the disc copies data optically by a laser means. The foregoing combination should also be included in the protection scope of the computer-readable medium.

In summary, what is described above is merely example embodiments of the technical solutions of the present invention, but is not intended to limit the protection scope of the present invention. The scope of the invention is defined by the appended claims.

## Claims

1. A discontinuous reception communication method, wherein the method comprises:
receiving (540), in an active time, wherein the active time is controlled by a timer T11, indication information sent by a network device, wherein the indication information comprises hybrid automatic repeat request, HARQ, feedback information for initial transmission or retransmission of data, and the timer T11 is started after the initial transmission or the retransmission of the data and is used to monitor a physical downlink control channel, PDCCH;
stopping (550) the timer T11 to end the active time, based on that the indication information is a negative acknowledgment and the grant-free scheduling resource has been allocated, and
determining (560), based on the indication information, whether to retransmit the data on a first grant-free scheduling resource, and **characterized in that** the initial transmission or the retransmission of the data is performed on a second grant-free scheduling resource.

2. The method according to claim 1, wherein the indication information is downlink feedback information, DFI.

3. The method according to any one of claims 1 to 2, wherein the indication information further comprises:
a carrier indicator field, CIF, or transmit power control, TPC, or a carrier indicator field, CIF and transmit power control, TPC.

4. The method according to any one of claims 1 to 3, wherein the indication information is scrambled by using a cell radio network temporary identifier, C-RNTI.

5. A communications apparatus, comprising:
a transceiver unit (910), configured to receive, in an active time, wherein the active time is controlled by a timer T11, indication information sent by a network device, wherein the indication information comprises hybrid automatic repeat request, HARQ, feedback information for initial transmission or retransmission of data, and the timer T11 is started after the initial transmission or the retransmission of the data and is used to monitor a physical downlink control channel, PDCCH; and
a control unit (920), configured to stop the timer T11, based on that the indication information is a negative acknowledgment and the grant-free scheduling resource has been allocated,
a determining unit (930), configured to determine, based on the received indication information, whether to retransmit data on a first grant-free scheduling resource,
**characterized in that**
the initial transmission or the retransmission of the data is performed on a second grant-free scheduling resource.

6. The communications apparatus according to claim 5, wherein the indication information is downlink feedback information, DFI.

7. The communications apparatus according to any one of claims 5 to 6, wherein the indication information further comprises:
a carrier indicator field, CIF, or transmit power control, TPC, or a carrier indicator field, CIF and transmit power control, TPC.

8. The communications apparatus according to any one of claims 5 to 7, wherein the indication information is scrambled by using a cell radio network temporary identifier, C-RNTI.

9. A terminal device, comprising the communications apparatus according to any one of claims 5 to 8.

10. A computer-readable storage medium, comprising an instruction, wherein when the instruction is run on a computer, the computer is enabled to perform the method according to any one of claims 1 to 4.

11. A communications system, comprising the terminal device according to claim 9 and the network device, wherein the network device is configured to send the indication information to the terminal device.

## Patentansprüche

1. Diskontinuierliches Empfangskommunikationsverfahren, wobei das Verfahren umfasst:
Empfangen (540) von Anzeigeinformationen, die durch eine Netzwerkvorrichtung gesendet werden, in einer aktiven Zeit, wobei die aktive Zeit durch einen Timer T11 gesteuert wird, wobei die Anzeigeinformationen hybride automatische Wiederholungsanforderungs-, HARQ-, Feedback-Informationen für initiale Übertragung oder erneute Übertragung von Daten umfassen und der Timer T11 nach der initialen Übertragung oder der erneuten Übertragung der Daten gestartet wird und verwendet wird, um einen physischen Downlink-Steuerkanal, PDCCH, zu überwachen;
Stoppen (550) des Timers T11, um die aktive Zeit zu beenden, basierend darauf, dass die Anzeigeinformationen eine negative Bestätigung sind und die bewilligungsfreie Planungsressource alloziert wurde, und
Bestimmen (560), basierend auf den Anzeigeinformationen, ob die Daten auf einer ersten bewilligungsfreien Planungsressource erneut zu übertragen sind, und **dadurch gekennzeichnet, dass** die initiale Übertragung oder die erneute Übertragung der Daten auf einer zweiten bewilligungsfreien Planungsressource durchgeführt wird.

2. Verfahren nach Anspruch 1, wobei die Anzeigeinformationen Downlink-Feedback-Informationen, DFI, sind.

3. Verfahren nach einem der Ansprüche 1 bis 2, wobei die Anzeigeinformationen ferner umfassen:
ein Trägerindikatorfeld, CIF, oder Sendeleistungssteuerung, TPC, oder ein Trägerindikatorfeld, CIF und Sendeleistungssteuerung, TPC.

4. Verfahren nach einem der Ansprüche 1 bis 3, wobei die Anzeigeinformationen unter Verwendung einer temporären Zellfunknetzwerkkennung, C-RNTI, verwürfelt werden.

5. Kommunikationsvorrichtung, umfassend:
eine Sendeempfängereinheit (910), die konfiguriert ist, um in einer aktiven Zeit, wobei die aktive Zeit durch einen Timer T11 gesteuert wird, Anzeigeinformationen zu empfangen, die durch eine Netzwerkvorrichtung gesendet werden, wobei die Anzeigeinformationen hybride automatische Wiederholungsanforderungs-, HARQ-, Feedback-Informationen für initiale Übertragung oder erneute Übertragung von Daten umfassen und der Timer T11 nach der initialen Übertragung oder der erneuten Übertragung der Daten gestartet wird und verwendet wird, um einen physischen Downlink-Steuerkanal, PDCCH, zu überwachen; und
eine Steuereinheit (920), die konfiguriert ist, um den Timer T11 zu stoppen, basierend darauf, dass die Anzeigeinformationen eine negative Bestätigung sind und die bewilligungsfreie Planungsressource alloziert wurde,
eine Bestimmungseinheit (930), die konfiguriert ist, um basierend auf den empfangenen Anzeigeinformationen zu bestimmen, ob Daten auf einer ersten bewilligungsfreien Planungsressource neu übertragen werden sollen, **dadurch gekennzeichnet, dass** die initiale Übertragung oder die erneute Übertragung der Daten auf einer zweiten bewilligungsfreien Planungsressource durchgeführt wird.

6. Kommunikationsvorrichtung nach Anspruch 5, wobei die Anzeigeinformationen Downlink-Feedback-Informationen, DFI, sind.

7. Kommunikationsvorrichtung nach einem der Ansprüche 5 bis 6, wobei die Anzeigeinformationen ferner umfassen:
ein Trägerindikatorfeld, CIF, oder Sendeleistungssteuerung, TPC, oder ein Trägerindikatorfeld, CIF und Sendeleistungssteuerung, TPC.

8. Kommunikationsvorrichtung nach einem der Ansprüche 5 bis 7, wobei die Anzeigeinformationen unter Verwendung einer temporären Zellfunknetzwerkkennung, C-RNTI, verwürfelt werden.

9. Endgerät, umfassend die Kommunikationsvorrichtung nach einem der Ansprüche 5 bis 8.

10. Computerlesbares Speichermedium, umfassend eine Anweisung, wobei, wenn die Anweisung auf einem Computer ausgeführt wird, der Computer befähigt wird, das Verfahren nach einem der Ansprüche 1 bis 4 durchzuführen.

11. Kommunikationssystem, umfassend das Endgerät nach Anspruch 9 und die Netzwerkvorrichtung, wobei die Netzwerkvorrichtung konfiguriert ist, um die Anzeigeinformationen an das Endgerät zu senden.

## Revendications

1. Procédé de communication à réception discontinue, dans lequel le procédé comprend :
la réception (540), dans un temps actif, dans lequel le temps actif est commandé par une minuterie T11, d'informations d'indication envoyées par un dispositif de réseau, dans lequel les informations d'indication comprennent des informations de rétroaction de demande de répétition automatique hybride, HARQ, pour la transmission initiale ou la retransmission de données, et la minuterie T11 est démarrée après la transmission initiale ou la retransmission des données et est utilisée pour surveiller un canal de commande de liaison descendante physique, PDCCH ;
l'arrêt (550) du minuteur T11 pour mettre fin au temps actif, en fonction du fait que les informations d'indication sont un accusé de réception négatif et que la ressource de planification sans autorisation a été allouée, et
la détermination (560), en fonction des informations d'indication, de s'il faut retransmettre les données sur une première ressource de planification sans autorisation, et **caractérisé en ce que** la transmission initiale ou la retransmission des données est réalisée sur une seconde ressource de planification sans autorisation.

2. Procédé selon la revendication 1, dans lequel les informations d'indication sont des informations de rétroaction de liaison descendante, DFI.

3. Procédé selon l'une quelconque des revendications 1 à 2, dans lequel les informations d'indication comprennent également :
un champ indicateur de porteuse, CIF, ou une commande de puissance de transmission, TPC, ou un champ indicateur de porteuse, CIF et une commande de puissance de transmission, TPC.

4. Procédé selon l'une quelconque des revendications 1 à 3, dans lequel les informations d'indication sont brouillées à l'aide d'un identifiant temporaire de réseau radio cellulaire, C-RNTI.

5. Appareil de communications, comprenant :
une unité d'émetteur-récepteur (910), configurée pour recevoir, dans un temps actif, dans lequel le temps actif est commandé par une minuterie T11, des informations d'indication envoyées par un dispositif de réseau, dans lequel les informations d'indication comprennent des informations de rétroaction de demande de répétition automatique hybride, HARQ, pour la transmission initiale ou la retransmission de données, et la minuterie T11 est démarrée après la transmission initiale ou la retransmission des données et est utilisée pour surveiller un canal de commande de liaison descendante physique, PDCCH ; et
une unité de commande (920), configurée pour arrêter la minuterie T11, en fonction du fait que les informations d'indication sont un accusé de réception négatif et que la ressource de planification sans autorisation a été allouée,
une unité de détermination (930), configurée pour déterminer, en fonction des informations d'indication reçues, s'il faut retransmettre des données sur une première ressource de planification sans autorisation, **caractérisé en ce que** la transmission initiale ou la retransmission des données est réalisée sur une seconde ressource de planification sans autorisation.

6. Appareil de communications selon la revendication 5, dans lequel les informations d'indication sont des informations de rétroaction de liaison descendante, DFI.

7. Appareil de communications selon l'une quelconque des revendications 5 à 6, dans lequel les informations d'indication comprennent également :
un champ indicateur de porteuse, CIF, ou une commande de puissance de transmission, TPC, ou un champ indicateur de porteuse, CIF et une commande de puissance de transmission, TPC.

8. Appareil de communications selon l'une quelconque des revendications 5 à 7, dans lequel les informations d'indication sont brouillées à l'aide d'un identifiant temporaire de réseau radio cellulaire, C-RNTI.

9. Dispositif terminal, comprenant l'appareil de communications selon l'une quelconque des revendications 5 à 8.

10. Support de stockage lisible par ordinateur, comprenant une instruction, dans lequel, lorsque l'instruction est exploitée sur un ordinateur, l'ordinateur est activé pour réaliser le procédé selon l'une quelconque des revendications 1 à 4.

11. Système de communications, comprenant le dispositif terminal selon la revendication 9 et le dispositif de réseau, dans lequel le dispositif de réseau est configuré pour envoyer les informations d'indication au dispositif terminal.
